(19) Europäisches Patentamt
European Patent Office
Office européen des brevets

(11) EP 4 626 112 A1

(12) **EUROPEAN PATENT APPLICATION**
published in accordance with Art. 153(4) EPC

(43) Date of publication:
01.10.2025 Bulletin 2025/40

(21) Application number: 23910541.4

(22) Date of filing: 25.12.2023

(51) International Patent Classification (IPC):
*H04W 72/21* (2023.01)

(52) Cooperative Patent Classification (CPC):
H04L 5/00; H04W 72/044; H04W 72/21;
H04W 72/23

(86) International application number:
PCT/CN2023/141699

(87) International publication number:
WO 2024/140616 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.12.2022 CN 202211743593

(71) Applicant: Huawei Technologies Co., Ltd.
Shenzhen, Guangdong 518129 (CN)

(72) Inventors:
• LIAN, Jin
Shenzhen, Guangdong 518129 (CN)
• CAI, Shijie
Shenzhen, Guangdong 518129 (CN)
• LIU, Kunpeng
Shenzhen, Guangdong 518129 (CN)

(74) Representative: Pfenning, Meinig & Partner mbB
Patent- und Rechtsanwälte
Theresienhöhe 11a
80339 München (DE)

(54) **COMMUNICATION METHODS AND APPARATUS, CHIP, CHIP MODULE AND STORAGE MEDIUM**

(57)    This application discloses a communication method and apparatus, a chip, a chip module, and a storage medium. **In** this application, a terminal sends first information to a network device, where the first information indicates at least one first beam corresponding to the terminal; the network device determines a reference signal resource or a reference signal resource set of the terminal based on the first information; and the network device sends second information to the terminal, where the second information indicates the reference signal resource or the reference signal resource set. According to the solution of this application, the terminal feeds back, to the network device, the beam corresponding to the terminal, so that the network device can allocate the reference signal resource or the reference signal resource set based on the beam corresponding to the terminal, thereby improving resource utilization.

[FIG. 2]

EP 4 626 112 A1

## Description

This application claims priority to Chinese Patent Application No. 202211743593.1, filed with the China National Intellectual Property Administration on December 28, 2022 and entitled "COMMUNICATION METHOD AND APPARATUS, CHIP, CHIP MODULE, AND STORAGE MEDIUM", which is incorporated herein by reference in its entirety.

## TECHNICAL FIELD

This application relates to the field of communication technologies, and in particular, to a communication method and apparatus, a chip, a chip module, and a storage medium.

## BACKGROUND

In long term evolution (long term evolution, LTE) and a new radio technology (new radio access technology, NR), a multiple-input multiple-output (multiple input and multiple output, MIMO) technology is widely used. To better implement MIMO performance, a base station needs to obtain an accurate downlink channel, and calculates a precoding (precoding) vector from the base station to a terminal by using the channel. In this way, system performance is greatly affected.

For a time division multiplexing (time division duplexing, TDD) system, because an uplink and a downlink are in a same frequency band, an uplink and a downlink of a wireless channel have reciprocity (in other words, the uplink channel and the downlink channel may be considered as the same). The base station receives a sounding reference signal (sounding reference signal, SRS) sent by the terminal, and performs channel estimation to obtain uplink channel state information (channel state information, CSI), which is equivalent to obtaining downlink CSI based on the reciprocity between the uplink and the downlink. The base station obtains the precoding vector through calculation by using the information, so that signal transmission quality can be improved or a transmission rate can be increased. In other words, accuracy of SRS channel estimation affects an overall throughput of the system, and an SRS sending periodicity seriously affects the performance.

However, because time-frequency resources allocated to the SRS are fixed, to shorten the SRS periodicity, that is, to increase a sampling frequency of the channel estimation, more time domain resources are to be occupied. Time domain resources may be obtained by reducing frequency domain resources. To be specific, on a premise of same SRS time-frequency resources, the SRS sending periodicity in time domain may be shortened (for example, to a 1/4 periodicity, which is equivalent to four times original time domain resources) via a sparse SRS design in frequency domain (where the "sparse" means, for example, only 1/4 of frequency domain resources are occupied), to improve channel estimation quality.

However, a number of resources allocated to the SRS is still limited, and as a number of terminals in a network increases, a problem of insufficient SRS resources occurs. On a premise of limited resources, the SRS sending periodicity is lengthened, and SRS channel estimation performance is affected. Consequently, a downlink precoding capability deteriorates, which finally causes a decrease in a network throughput.

In view of this, how to serve more terminals under existing resources, to reduce impact caused by the insufficient SRS resources, is a problem that urgently needs to be resolved.

## SUMMARY

This application provides a communication method and apparatus, a chip, a chip module, and a storage medium, to improve utilization of a reference signal resource.

According to a first aspect, a communication method is provided, where the method includes: A network device receives first information from a terminal, where the first information indicates at least one first beam corresponding to the terminal; the network device determines a reference signal resource or a reference signal resource set of the terminal based on the first information; and the network device sends second information to the terminal, where the second information indicates the reference signal resource or the reference signal resource set.

In this aspect, the network device receives a beam that corresponds to the terminal and that is fed back by the terminal, so that the network device can allocate the reference signal resource or the reference signal resource set based on the beam corresponding to the terminal, thereby improving resource utilization.

In a possible implementation, the method further includes: The network device receives a reference signal sent by the terminal based on the reference signal resource or the reference signal resource set.

According to a second aspect, a communication method is provided, where the method includes: A terminal sends first information to a network device, where the first information indicates at least one first beam corresponding to the terminal; and the terminal receives second information from the network device, where the second information indicates a reference signal resource or a reference signal resource set, and the reference signal resource or the reference signal resource set is determined based on the first information.

In this aspect, the terminal feeds back, to the network device, the beam corresponding to the terminal, so that the network device can allocate the reference signal resource or the reference signal resource set based on the beam corresponding to the terminal, thereby improving resource utilization.

In a possible implementation, the method further includes: The terminal sends a reference signal to the network device based on the reference signal resource or the reference signal resource set.

According to a third aspect, a communication apparatus is provided, and can implement the communication method in the first aspect. For example, the communication apparatus may be a network device or a chip system in the network device. The foregoing method may be implemented by software, hardware, or hardware executing corresponding software.

In a possible implementation, the communication apparatus includes a transceiver unit and a processing unit, where the transceiver unit is configured to: receive first information from a terminal, where the first information indicates at least one first beam corresponding to the terminal; the processing unit is configured to: determine a reference signal resource or a reference signal resource set of the terminal based on the first information; and the transceiver unit is further configured to: send second information to the terminal, where the second information indicates the reference signal resource or the reference signal resource set.

Optionally, the transceiver unit is further configured to: receive a reference signal sent by the terminal based on the reference signal resource or the reference signal resource set.

According to a fourth aspect, a communication apparatus is provided, and can implement the communication method in the second aspect. For example, the communication apparatus may be a terminal or a chip system in the terminal. The foregoing method may be implemented by software, hardware, or hardware executing corresponding software.

In a possible implementation, the communication apparatus includes a transceiver unit and a processing unit, where the transceiver unit is configured to: send first information to a network device, where the first information indicates at least one first beam corresponding to a terminal; and the transceiver unit is further configured to: receive second information from the network device, where the second information indicates a reference signal resource or a reference signal resource set, and the reference signal resource or the reference signal resource set is determined based on the first information.

Optionally, the transceiver unit is further configured to: send a reference signal to the network device based on the reference signal resource or the reference signal resource set.

With reference to the first aspect, the second aspect, the third aspect, and the fourth aspect or any one of implementations of the first aspect to the fourth aspect, in still another possible implementation, the at least one first beam is all beams corresponding to the terminal, the at least one first beam is a specified number of beams with strongest energy in all beams corresponding to the terminal, or the at least one first beam is a beam whose energy is greater than or equal to a first threshold in all beams corresponding to the terminal, where the energy is a norm sum of one or more frequency domain/delay channels corresponding to a beam.

In this implementation, the terminal feeds back all the beams corresponding to the terminal, so that the network device can accurately allocate the reference signal resource or the reference signal resource set based on the beam corresponding to the terminal, thereby improving the resource utilization. The terminal feeds back a strong beam, so that feedback signaling overheads can be reduced while the resource utilization is improved.

With reference to the first aspect, the second aspect, the third aspect, and the fourth aspect or any one of implementations of the first aspect to the fourth aspect, in still another possible implementation, the at least one first beam is determined via at least one horizontal spatial domain basis and at least one vertical spatial domain basis, and each of the at least one horizontal spatial domain basis and each of the at least one vertical spatial domain basis are used for determining one first beam.

In this implementation, the at least one first beam corresponding to the terminal may be determined via the horizontal spatial domain basis and the vertical spatial domain basis, so that the network device can accurately allocate the reference signal resource or the reference signal resource set based on the beam corresponding to the terminal, thereby improving the resource utilization.

With reference to the first aspect, the second aspect, the third aspect, and the fourth aspect or any one of implementations of the first aspect to the fourth aspect, in still another possible implementation, the at least one horizontal spatial domain basis includes one or more groups of horizontal spatial domain bases, each group of the one or more groups of horizontal spatial domain bases includes at least two horizontal spatial domain bases, the at least two horizontal spatial domain bases are consecutive, and the "consecutive" means that horizontal spatial domain basis indexes corresponding to the horizontal spatial domain bases are consecutive.

With reference to the first aspect, the second aspect, the third aspect, and the fourth aspect or any one of implementations of the first aspect to the fourth aspect, in still another possible implementation, for each group of horizontal spatial domain bases, the first information indicates two horizontal spatial domain basis indexes, and the two horizontal spatial domain basis indexes are an index with a largest value and an index with a smallest value in horizontal spatial domain basis indexes corresponding to one group of the horizontal spatial domain bases.

In this implementation, the index with the largest value and the index with the smallest value are reported, so that the signaling overheads can be reduced while the at least one first beam corresponding to the terminal can be determined.

With reference to the first aspect, the second aspect, the third aspect, and the fourth aspect or any one of implementations of the first aspect to the fourth aspect, in still another possible implementation, for each group of horizontal spatial domain bases, the first information indicates one horizontal spatial domain basis index and one index length value, the horizontal spatial domain basis index and the index length value are used for determining each horizontal spatial domain base in the one group of the horizontal spatial domain bases, and the horizontal spatial domain basis index is an index with a largest value or an index with a smallest value in horizontal spatial domain basis indexes corresponding to one group of the horizontal spatial domain bases.

In this implementation, the horizontal spatial domain basis index and the index length value are reported, so that the signaling overheads can be reduced while the at least one first beam corresponding to the terminal can be determined.

With reference to the first aspect, the second aspect, the third aspect, and the fourth aspect or any one of implementations of the first aspect to the fourth aspect, in still another possible implementation, the first information indicates a horizontal spatial domain basis index corresponding to each of the at least one horizontal spatial domain basis.

In this implementation, the horizontal spatial domain basis index corresponding to each of the at least one horizontal spatial domain basis is reported, so that the at least one first beam corresponding to the terminal can be determined.

With reference to the first aspect, the second aspect, the third aspect, and the fourth aspect or any one of implementations of the first aspect to the fourth aspect, in still another possible implementation, the at least one vertical spatial domain basis includes one or more groups of vertical spatial domain bases, each group of the one or more groups of vertical spatial domain bases includes at least two vertical spatial domain bases, the at least two vertical spatial domain bases are consecutive, and the "consecutive" means that vertical spatial domain basis indexes corresponding to the vertical spatial domain bases are consecutive.

With reference to the first aspect, the second aspect, the third aspect, and the fourth aspect or any one of implementations of the first aspect to the fourth aspect, in still another possible implementation, for each group of the vertical spatial domain bases, the first information further indicates two vertical spatial domain basis indexes, and the two vertical spatial domain basis indexes are respectively an index with a largest value and an index with a smallest value in vertical spatial domain basis indexes corresponding to the group of the vertical spatial domain bases.

In this implementation, the index with the largest value and the index with the smallest value are reported, so that the signaling overheads can be reduced while the at least one first beam corresponding to the terminal can be determined.

With reference to the first aspect, the second aspect, the third aspect, and the fourth aspect or any one of implementations of the first aspect to the fourth aspect, in still another possible implementation, for each group of the vertical spatial domain bases, the first information further indicates one vertical spatial domain basis index and one index length value, the vertical spatial domain basis index and the index length value are used for determining each vertical spatial domain base in the one group of the vertical spatial domain bases, and the vertical spatial domain basis index is an index with a largest value or an index with a smallest value in vertical spatial domain basis indexes corresponding to the group of the vertical spatial domain bases.

In this implementation, the vertical spatial domain basis index and the index length value are reported, so that the signaling overheads can be reduced while the at least one first beam corresponding to the terminal can be determined.

With reference to the first aspect, the second aspect, the third aspect, and the fourth aspect or any one of implementations of the first aspect to the fourth aspect, in still another possible implementation, the first information further indicates a vertical spatial domain basis index corresponding to each of the at least one vertical spatial domain basis.

In this implementation, the vertical spatial domain basis index corresponding to each of the at least one vertical spatial domain basis is reported, so that the at least one first beam corresponding to the terminal can be determined.

With reference to the first aspect, the second aspect, the third aspect, and the fourth aspect or any one of implementations of the first aspect to the fourth aspect, in still another possible implementation, the first information further indicates energy information of each of the at least one first beam; or energy information of a strongest beam in the at least one first beam and energy information that is of each of the at least one first beam and that is normalized based on the energy information of the strongest beam.

In this implementation, the energy information of the beam is fed back, so that the network device can minimize beam interference between space division terminals.

With reference to the first aspect, the second aspect, the third aspect, and the fourth aspect or any one of implementations of the first aspect to the fourth aspect, in still another possible implementation, the first information includes at least one of the following information: a horizontal spatial domain basis index corresponding to at least one second beam and a vertical spatial domain basis index corresponding to the at least one second beam, where the at least one second beam is one or more beams with strongest energy in the at least one first beam.

In this implementation, a horizontal spatial domain basis index and a vertical spatial domain basis index that are of the beam with the strongest energy are reported, so that the network device can determine energy distribution of the at least one beam corresponding to the terminal.

With reference to the first aspect, the second aspect, the third aspect, and the fourth aspect or any one of implementations of the first aspect to the fourth aspect, in still another possible implementation, the first information further includes at least one of the following information: a horizontal spatial domain basis radius corresponding to the at least one second beam and a vertical spatial domain basis radius corresponding to the at least one second beam, where the horizontal spatial domain basis radius and the vertical spatial domain basis radius are determined based on the at least one first beam.

With reference to the first aspect, the second aspect, the third aspect, and the fourth aspect or any one of implementations of the first aspect to the fourth aspect, in still another possible implementation, the first information further includes at least one of the following information: an energy gradient in a horizontal spatial domain basis direction corresponding to the at least one second beam and an energy gradient in a vertical spatial domain basis direction corresponding to the at least one second beam, where the energy gradient in the horizontal spatial domain basis direction and the energy gradient in the vertical spatial domain basis direction are determined based on the at least one first beam.

In this implementation, the energy gradient in the horizontal/vertical spatial domain basis direction is reported, so that the network device can determine the energy distribution of the at least one beam corresponding to the terminal.

With reference to the first aspect, the second aspect, the third aspect, and the fourth aspect or any one of implementations of the first aspect to the fourth aspect, in still another possible implementation, the first information further includes bitmap indication information of the at least one first beam, one bit in the bitmap indication information corresponds to one beam, and the bit indicates that the beam corresponding to the bit is/is not the first beam.

With reference to the third aspect or the fourth aspect, in still another possible implementation, the communication apparatus in the third aspect or the fourth aspect includes a processor coupled to a memory, where the processor is configured to support the apparatus in performing corresponding functions in the foregoing communication methods; and the memory is configured to be coupled to the processor, and stores a program (instructions) and/or data necessary for the apparatus. Optionally, the communication apparatus may further include a communication interface configured to support communication between the apparatus and another network element. Optionally, the memory may be located inside the communication apparatus, or may be located outside the communication apparatus.

With reference to the third aspect or the fourth aspect, in still another possible implementation, the communication apparatus in the third aspect or the fourth aspect includes a processor and a transceiver apparatus, where the processor is coupled to the transceiver apparatus, and the processor is configured to execute a computer program or instructions, to control the transceiver apparatus to receive and send information. When the processor executes the computer program or the instructions, the processor is further configured to implement the foregoing methods by using a logic circuit or by executing code instructions. The transceiver apparatus may be a transceiver, a transceiver circuit, or an input/output interface, and is configured to receive a signal from an apparatus other than the communication apparatus and transmit the signal to the processor, or send a signal from the processor to an apparatus other than the communication apparatus. When the communication apparatus is a chip, the transceiver apparatus is a transceiver circuit or an input/output interface.

When the communication apparatus in the third aspect or the fourth aspect is a chip or a chip module, a sending unit may be an output unit, such as an output circuit or a communication interface; and a receiving unit may be an input unit, such as an input circuit or a communication interface. When the communication apparatus is a terminal or an access network device, the sending unit may be a transmitter or a transmitter machine; and the receiving unit may be a receiver or a receiver machine.

According to a fifth aspect, a computer-readable storage medium is provided, where the computer-readable storage medium stores a computer program or instructions. When a computer executes the computer program or the instructions, the methods in the foregoing aspects are implemented.

According to a sixth aspect, a computer program product including instructions is provided. When the instructions are run on a communication apparatus, the communication apparatus is caused to perform the methods in the foregoing aspects.

According to a seventh aspect, a communication system is provided. The communication system includes the communication apparatus in the third aspect and the communication apparatus in the fourth aspect.

BRIEF DESCRIPTION OF DRAWINGS

FIG. 1 is a diagram of an architecture of a communication system 1000 to which an embodiment of this application is applied;
FIG. 2 is a schematic flowchart of a communication method according to an embodiment of this application;
FIG. 3 is a diagram of an example of antenna expansion according to an embodiment of this application;

FIG. 4a is a diagram of an example of beams corresponding to a terminal according to an embodiment of this application;

FIG. 4b is a diagram of another example of beams corresponding to a terminal according to an embodiment of this application;

FIG. 5 is a diagram of an example of simulation of energy distribution of a beam according to an embodiment of this application;

FIG. 6 is a diagram of an example of quantization of energy distribution of a beam according to an embodiment of this application;

FIG. 7 is another diagram of an example of quantization of energy distribution of a beam according to an embodiment of this application;

FIG. 8 is still another diagram of an example of quantization of energy distribution of a beam according to an embodiment of this application;

FIG. 9 is still another diagram of an example of quantization of energy distribution of a beam according to an embodiment of this application;

FIG. 10 is a diagram of a structure of a communication apparatus according to an embodiment of this application; and

FIG. 11 is a diagram of a structure of another communication apparatus according to an embodiment of this application.

DESCRIPTION OF EMBODIMENTS

The following describes embodiments of this application with reference to accompanying drawings in embodiments of this application.

Embodiments of this application may be applied to various communication systems, such as a long term evolution (long term evolution, LTE) system, an LTE time division duplex (time division duplex, TDD) system, a 5th generation (5th generation, 5G) communication system, and a future 6th generation (6th generation, 6G) communication system.

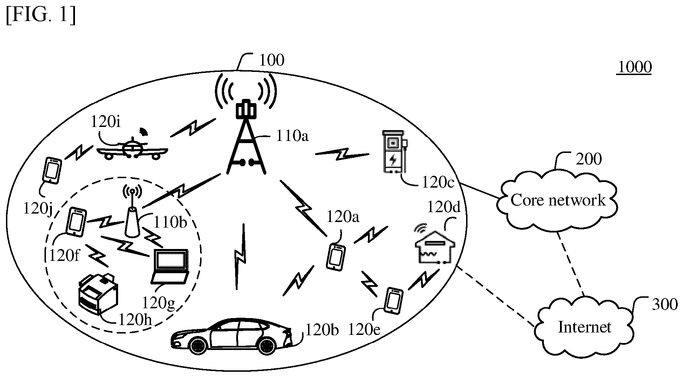

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device may be integrated into a same physical device, or a part of functions of the core network device and a part of functions of the radio access network device may be integrated into one physical device. Mutual connections between terminals and between radio access network devices may be implemented in a wired or wireless manner. FIG. 1 is only a diagram. The communication system may further include other network devices, for example, may further include a wireless relay device and a wireless backhaul device, which are not shown in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or a unit that completes a part of functions of the base station, for example, may be a central unit (central unit, CU), or may be a distributed unit (distributed unit, DU). The radio access network device may be a macro base station (for example, 110a in FIG. 1), or may be a micro base station or an indoor base station (for example, 110b in FIG. 1), or may be a relay node or a donor node. A specific technology and a specific device form that are used by the radio access network device are not limited in embodiments of this application. For ease of description, the following uses an example in which a base station is used as the radio access network device for description.

The terminal may also be referred to as a terminal device, user equipment (user equipment, UE), a mobile station, a mobile terminal, or the like. The terminal may be widely used in various scenarios, such as device-to-device (device-to-device, D2D), vehicle to everything (vehicle to everything, V2X) communication, machine-type communication (machine-type communication, MTC), the internet of things (internet of things, IoT), virtual reality, augmented reality, industrial control, autonomous driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robotic arm, a smart home device, or the like. A specific technology and a specific device form that are used by the terminal are not limited in embodiments of this application.

The base station and the terminal may be at fixed positions or may be movable. The base station and the terminal may be deployed on the land, including an indoor or outdoor device, a handheld device, or a vehicle-mounted device; may be deployed on a water surface; or may be deployed on an airplane, a balloon, and an artificial satellite in the air. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for a base station 110a, 120i is a terminal. In other words, communication between 110a and 120i is performed through a radio air interface protocol. Certainly, communication between 110a and 120i may alternatively be performed through an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of a base station, and 120a to 120j each in FIG. 1 may be referred to as a communication apparatus having a function of a terminal.

Communication between the base station and the terminal, between base stations, or between terminals may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed via a spectrum above 6 GHz, or may be performed by using both the spectrum below 6 GHz and the spectrum above 6 GHz. A spectrum resource used for wireless communication is not limited in embodiments of this application.

In embodiments of this application, a function of the base station may alternatively be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, or a smart city. A function of the terminal may alternatively be performed by a module (for example, a chip or a modem) in the terminal, or may be performed by an apparatus including the function of the terminal.

In this application, the base station sends a downlink signal or downlink information to the terminal, where the downlink information is carried on a downlink channel. The terminal sends an uplink signal or uplink information to the base station, where the uplink information is carried on an uplink channel. To communicate with the base station, the terminal establishes a wireless connection to a cell controlled by the base station. The cell that establishes the wireless connection to the terminal is referred to as a serving cell of the terminal. When communicating with the serving cell, the terminal is also subject to interference from a signal from a neighboring cell.

In embodiments of this application, a time domain symbol may be an orthogonal frequency division multiplexing (orthogonal frequency division multiplexing, OFDM) symbol, or may be a discrete Fourier transform-spread-OFDM (Discrete Fourier Transform-spread-OFDM, DFT-s-OFDM) symbol. Unless otherwise specified, a symbol in embodiments of this application is the time domain symbol.

It may be understood that, in embodiments of this application, a physical downlink shared channel (physical downlink shared channel, PDSCH), a physical downlink control channel (physical downlink control channel, PDCCH), and a physical uplink shared channel (physical uplink shared channel, PUSCH) are merely used as examples of a downlink data channel, a downlink control channel, and an uplink data channel. In different systems and different scenarios, the data channel and the control channel may have different names. This is not limited in embodiments of this application.

Several concepts that may be related to this application are as follows:

(1) Reference signal resource

The reference signal resource may be used for configuring transmission attributes of a reference signal, such as a reference signal bandwidth, a time-frequency resource position, a port mapping relationship, a power factor, and a scrambling code. For details, refer to a conventional technology. A transmit-end device may send a reference signal based on the reference signal resource, and a receive-end device may receive the reference signal based on the reference signal resource. One reference signal resource may include one or more resource blocks (resource blocks, RBs).

In embodiments of this application, the reference signal resource may be, for example, an SRS resource.

The SRS resource (SRS resource) may include a number of SRS ports (Number of SRS ports), a number of OFDM symbols (Number of OFDM symbols in the SRS resource), an SRS bandwidth (SRS bandwidth), an SRS frequency domain position and configurable shift (frequency domain position and configurable shift), a frequency hopping bandwidth (Frequency hopping bandwidth), a cyclic shift (Cyclic shift), a transmission comb value (Transmission comb value), a transmission comb offset (Transmission comb offset), an SRS sequence ID (SRS sequence ID), and the like.

(2) Reference signal resource set (Resource Set)

One reference signal resource set may include $K \geq 1$ reference signal resources, and the "include" indicates that the $K \geq 1$ reference signal resources are configured based on the reference signal resource set.

In embodiments of this application, the reference signal resource set may be, for example, an SRS resource set (SRS Resource set).

As described in the background, a base station may perform uplink and downlink channel estimation by using an SRS. Therefore, accuracy of SRS channel estimation affects an overall throughput of a system, and an SRS sending periodicity seriously affects performance. However, a number of resources allocated to the SRS is limited, and as a number of terminals in a network increases, a problem of insufficient SRS resources occurs. On a premise of limited resources, the SRS sending periodicity is lengthened, and SRS channel estimation performance is affected. Consequently, a downlink precoding capability deteriorates, which finally causes a decrease in a network throughput.

Embodiments of this application provide a communication solution. A terminal feeds back, to a network device, a beam corresponding to the terminal, so that the network device can allocate a reference signal resource or a reference signal resource set based on the beam corresponding to the terminal, thereby improving resource utilization.

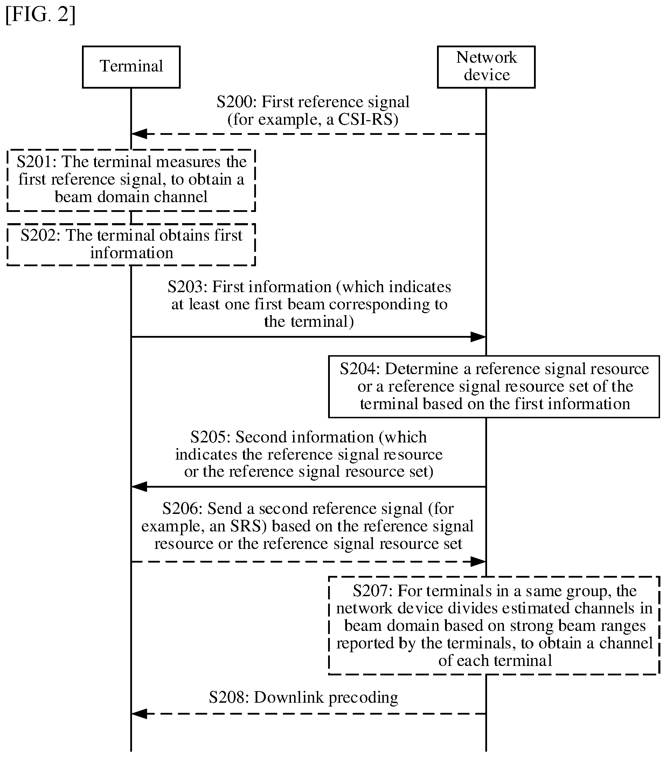

FIG. 2 is a schematic flowchart of a communication method according to an embodiment of this application. For example, the method may include the following steps.

S200: A network device sends a first reference signal to a terminal.

Correspondingly, the terminal receives the first reference signal.

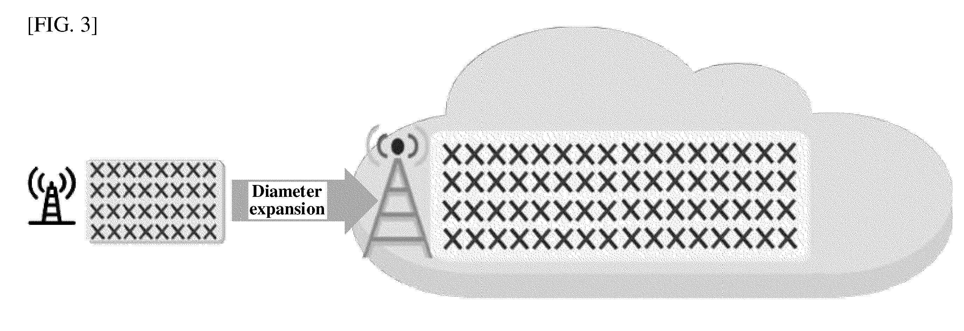

FIG. 3 is a diagram of an example of antenna expansion according to an embodiment of this application. Original 4*8*2=64 antennas are expanded to 4*16*2=128 antennas. "2" refers to two polarization directions. Certainly, the original antennas may be further expanded to 256 antennas or the like. This is not limited in this application.

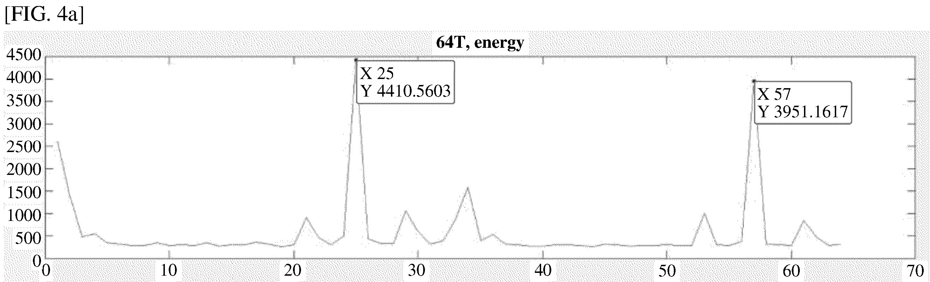

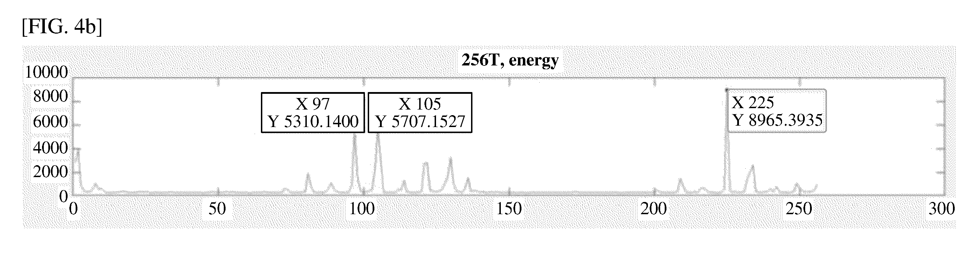

As antennas of an increasing number are deployed on a base station, corresponding beam directions are increasingly centralized, and spatial domain channels become sparser. FIG. 4a is a diagram of an example of beams corresponding to the terminal according to an embodiment of this application. When 64 antennas are deployed on the base station, the beams corresponding to the terminal are concentrated only on beams corresponding to a 25th antenna and a 57th antenna. In addition, FIG. 4b is a diagram of another example of beams corresponding to the terminal according to an embodiment of this application. When 256 antennas are deployed on the base station, the beams corresponding to the terminal are concentrated only on beams corresponding to a 97th antenna, a 105th antenna, and a 225th antenna. A horizontal coordinate is a number of antennas, and a vertical coordinate is energy of a beam.

To cause the terminal to perform measurement on the channel, the network device sends the first reference signal to the terminal. The first reference signal is a downlink reference signal. For example, the first reference signal may be a channel state information-reference signal (channel state information-reference signal, CSI-RS).

S201: The terminal measures the first reference signal, to obtain a beam domain channel.

Generally, a channel includes time domain, frequency domain, and space domain, and the space domain further includes antenna domain and beam domain. In this embodiment, after receiving the first reference signal, the terminal measures the first reference signal, to obtain an antenna domain channel. Further, the terminal may perform transformation based on the antenna domain channel to obtain the beam domain channel. For example, a 256*4 beam domain channel may be obtained through transformation of a 256*4 antenna domain channel. The beam domain channel is a 256*4 matrix.

A spatial domain vector may be one of vectors for constructing a channel matrix. The spatial domain vector may also be referred to as a spatial domain component vector, a beam (beam) vector, a spatial domain beam basis vector, a spatial domain basis vector, or the like. One spatial domain vector may correspond to one beam or one beam direction. Each element in the spatial domain vector may indicate a weight of each antenna port (antenna port). Signals of antenna ports are linearly superimposed based on weights of the antenna ports indicated by using elements in the spatial domain vector, so that an area with a strong signal can be formed in a specific direction in space.

For ease of description, it is assumed that the spatial domain vector is denoted as u in the following descriptions. A length of the spatial domain vector u may be a number $N_s$ of transmit antenna ports in one polarization direction, where $N_s$ is an integer greater than or equal to 1. The spatial domain vector may be, for example, a column vector or a row vector with a length of $N_s$. This is not limited in this application.

In an implementation, the spatial domain vector is a discrete Fourier transform (discrete Fourier transform, DFT) vector. The DFT vector may be a vector in a DFT matrix.

In an implementation, the spatial domain vector is a conjugate transpose vector of a DFT vector. The DFT conjugate transpose vector may be a column vector in a conjugate transpose matrix of the DFT matrix.

In an implementation, the spatial domain vector is an oversampling DFT vector. The oversampling DFT vector may be a vector in an oversampling DFT matrix.

In an implementation, the spatial domain vector may be, for example, a two-dimensional (2 dimensions, 2D)-DFT vector $v_{l,m}$ defined in a type II (type II) codebook in the NR protocol 38.214 release 15 (release 15, R15). In other words, the spatial domain vector may be a 2D-DFT vector or an oversampling 2D-DFT vector. For brevity, detailed descriptions of the 2D-DFT vector are omitted herein.

One or more spatial domain vectors may form a matrix $W_1$, and each column vector in $W_1$ corresponds to one spatial domain vector.

The antenna domain channel $H_{Ant}$ may be projected onto the matrix $W_1$ formed by the spatial domain vector, and an obtained matrix $H_{beam}$ is the beam domain channel.

$$\mathrm{H_{Ant}} = W_1 H_{beam}, \; H_{beam} = W_1^H H_{Ant}$$

S202: The terminal obtains first information.

After obtaining the beam domain channel through the measurement, the terminal may determine energy of each beam based on the beam domain channel. For example, if each beam corresponds to a 1*4 vector, a norm sum of elements is the energy of the beam. For another example, it is assumed that the time domain is 1, the frequency domain is 600, the beam domain channel is 256*4, and each beam corresponds to a 1*4*600 vector. In this case, the norm sum of elements is the energy of the beam.

As antennas of an increasing number are deployed on the network device, corresponding beam directions are increasingly centralized. Strength of a signal received by each terminal on a part of beams is high, and strength of the signal received by each terminal on remaining beams is weak or there is no signal. Therefore, the terminal may determine, based on the energy of each beam, at least one beam corresponding to the terminal, to obtain the first information. The first information indicates at least one first beam corresponding to the terminal.

For example, the at least one beam corresponding to the terminal may be all beams corresponding to the terminal, or may be a strong beam in all beams corresponding to the terminal.

The strong beam may be a specified number of beams with strongest energy in all the beams corresponding to the terminal (for example, the terminal corresponds to 10 beams, and two beams have strongest energy), or may be a beam whose energy is greater than or equal to a first threshold in all the beams corresponding to the terminal. The energy is a norm sum of one or more frequency domain/delay channels corresponding to a beam.

Specifically, energy of the at least one beam corresponding to the terminal varies at different spatial domain positions. Further, the terminal may further estimate energy distribution of the at least one beam corresponding to the terminal. The energy distribution refers to magnitudes of energy of a beam at different spatial domain positions.

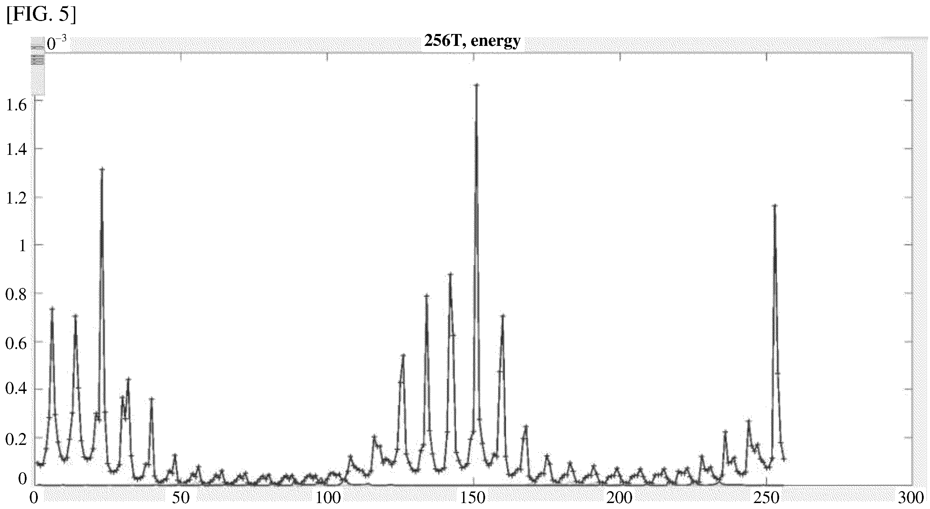

FIG. 5 is a diagram of an example of simulation of energy distribution of a beam according to an embodiment of this application. Beams with strong signals received by UE 1 from the network device are concentrated on beams with indexes of 100 to 200, and beams with indexes of 140 to 160 have the strongest energy. A horizontal coordinate is a beam index, and a vertical coordinate is energy of a beam.

In this embodiment, the terminal may alternatively have pre-stored or obtained the first information in another manner. In this case, the foregoing steps S200 to S202 may not be performed in this embodiment, that is, the foregoing steps are optional, and are indicated by dashed lines in the figure.

S203: The terminal sends the first information to the network device.

After obtaining the first information, the terminal sends the first information to the network device. Correspondingly, the network device receives the first information.

It may be understood that, a coverage area of the network device may include a plurality of terminals. The plurality of terminals may separately send the first information to the network device, and the first information indicates at least one first beam corresponding to each terminal. FIG. 2 is only an example in which one terminal sends the first information of the terminal, and operations of other terminals are the same.

The at least one first beam may be determined via a horizontal spatial domain basis index and a vertical spatial domain basis index that are of the beam. A number of horizontal spatial domain bases and a number of vertical spatial domain bases may be determined based on antenna arrangement or antenna port arrangement of the network device, or may be determined based on a higher-layer parameter (n1-n2) and/or $(O_1, O_2)$, $N_1$ and $N_2$ may be determined based on the higher-layer parameter (n1-n2). The number of horizontal spatial domain bases may be $N_1 O_1$ or $N_1$, and the number of vertical spatial domain bases may be $N_2 O_2$ or $N_2$. The horizontal spatial domain basis index and the vertical spatial domain basis index may be determined based on the number of horizontal spatial domain bases and the number of vertical spatial domain bases. Horizontal spatial domain basis indexes may be 0, 1, ..., $N_1 O_1$ - 1, or 0, 1, ..., $N_1$ - 1. Vertical spatial domain basis indexes may be 0, 1, ..., $N_2 O_2$ - 1, or 0, 1, ..., $N_2$ - 1.

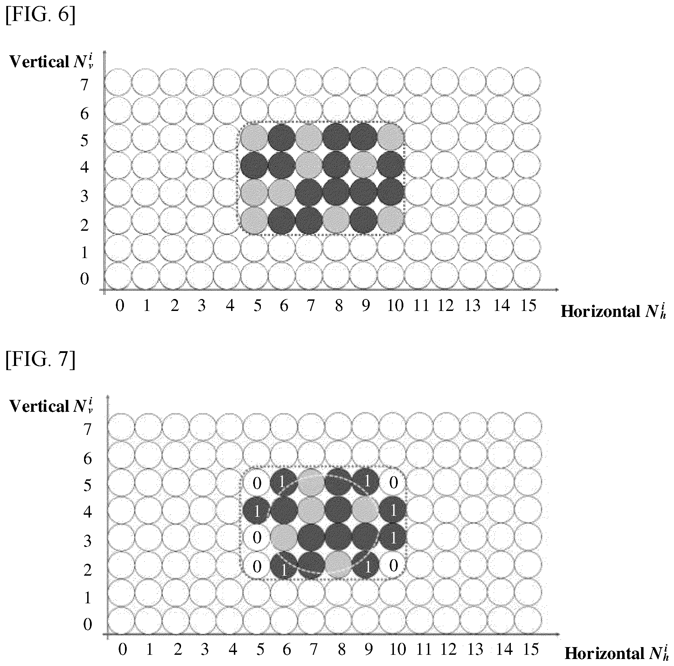

The at least one first beam corresponding to the terminal may be determined via at least one horizontal spatial domain basis and at least one vertical spatial domain basis. FIG. 6 is a diagram of an example of quantization of energy distribution of a beam according to an embodiment of this application. Each of the at least one horizontal spatial domain basis and each of the at least one vertical spatial domain basis may be used for determining one first beam (that is, each small circle in the figure corresponds to one first beam). In this figure, a total of 16*8=128 first beams in a specific polarization direction may be determined. A number of horizontal spatial domain bases is 16, a number of vertical spatial domain bases is 8, a horizontal coordinate is a horizontal spatial domain basis index $N_h^i$, and a vertical coordinate is a vertical spatial domain basis index $N_v^i$.

However, a number of TDD 256T beams greatly increases in comparison with a number of beams in a frequency division multiplexing (frequency division duplexing, FDD) frequency band. If the terminal explicitly reports all the beams corresponding to the terminal, a large number of overheads exist. In addition, to enable space division on an SRS, accurate beams of each terminal are not required, and only an approximate coverage area of the beams of each terminal is required, to implement spatial domain resource division. Therefore, the first information may indicate the strong beam in all the beams corresponding to the terminal.

For example, the at least one horizontal spatial domain basis may include one or more groups of horizontal spatial domain bases, each group of the one or more groups of horizontal spatial domain bases includes at least two horizontal spatial domain bases, the at least two horizontal spatial domain bases are consecutive, and the "consecutive" means that horizontal spatial domain basis indexes corresponding to the horizontal spatial domain bases are consecutive. Correspondingly, the at least one vertical spatial domain basis includes one or more groups of vertical spatial domain bases, each group of the one or more groups of vertical spatial domain bases includes at least two vertical spatial domain bases, the at least two vertical spatial domain bases are consecutive, and the "consecutive" means that vertical spatial domain basis indexes corresponding to the vertical spatial domain bases are consecutive. Still refer to FIG. 6. A group of horizontal spatial domain bases and a group of vertical spatial domain bases are marked by a rectangular box. Indexes of the group of the horizontal spatial domain bases range from 5 to 10, and in the group of the horizontal spatial domain bases, the horizontal spatial domain basis indexes corresponding to the horizontal spatial domain bases are consecutive. Indexes of the group of the vertical spatial domain bases range from 2 to 5, and in the group of the vertical spatial domain bases, the vertical spatial domain basis indexes corresponding to the vertical spatial domain bases are consecutive.

That the terminal reports the at least one first beam corresponding to the terminal may be specifically that the terminal reports one or more groups of spatial domain bases. The at least one first beam may be the strong beam in all the beams corresponding to the terminal. There may be the following several implementation forms of reporting by the terminal:

Implementation A1: For each group of the horizontal spatial domain bases, the first information indicates two horizontal spatial domain basis indexes, and the two horizontal spatial domain basis indexes are an index with a largest value and an index with a smallest value in horizontal spatial domain basis indexes corresponding to one group of the horizontal spatial domain bases. In addition, for each group of the vertical spatial domain bases, the first information further indicates two vertical spatial domain basis indexes, and the two vertical spatial domain basis indexes are respectively an index with a largest value and an index with a smallest value in vertical spatial domain basis indexes corresponding to the group of the vertical spatial domain bases. For example, still refer to FIG. 6. The first information includes two horizontal spatial domain basis indexes: 5 and 10, and further includes two vertical spatial domain basis indexes: 2 and 5. It should be understood that, the first information indicates six horizontal spatial domain basis indexes 5, 6, 7, 8, 9, and 10 and four vertical spatial domain basis indexes 2, 3, 4, and 5. Reported beams are 6*4=24 beams corresponding to six horizontal spatial domain bases and four vertical spatial domain bases, and are used as beams (strong beams) corresponding to the terminal.

Implementation A2: For each group of the horizontal spatial domain bases, the first information indicates one horizontal spatial domain basis index and one index length value, the horizontal spatial domain basis index and the index length value are used for determining each horizontal spatial domain base in the one group of the horizontal spatial domain bases, and the horizontal spatial domain basis index is an index with a largest value or an index with a smallest value in horizontal spatial domain basis indexes corresponding to one group of the horizontal spatial domain bases. In addition, for each group of the vertical spatial domain bases, the first information further indicates one vertical spatial domain basis index and one index length value, the vertical spatial domain basis index and the index length value are used for determining each vertical spatial domain base in the one group of the vertical spatial domain bases, and the vertical spatial domain basis index is an index with a largest value or an index with a smallest value in vertical spatial domain basis indexes corresponding to the group of the vertical spatial domain bases. For example, still refer to FIG. 6. The first information includes a horizontal spatial domain basis index 5, an index length value 6 of horizontal spatial domain bases, a vertical spatial domain basis index 2, and an index length value 4 of vertical spatial domain bases. Alternatively, the first information includes a horizontal spatial domain basis index 10, an index length value 6 of horizontal spatial domain bases, a vertical spatial domain basis index 5, and an index length value 4 of vertical spatial domain bases. It should be understood that, the first information indicates six horizontal spatial domain basis indexes 5, 6, 7, 8, 9, and 10 and four vertical spatial domain basis indexes 2, 3, 4, and 5. Reported beams are 6*4=24 beams corresponding to six horizontal spatial domain bases and four vertical spatial domain bases, and are used as beams (strong beams) corresponding to the terminal.

Implementation A3: The first information indicates a horizontal spatial domain basis index corresponding to each of the at least one horizontal spatial domain basis, and further indicates a vertical spatial domain basis index corresponding to each of the at least one vertical spatial domain basis. For example, still refer to FIG. 6. The first information includes the following horizontal spatial domain basis indexes: 5, 6, 7, 8, 9, and 10, and further includes the following vertical spatial domain basis indexes: 2, 3, 4, and 5. The terminal reports a total of 6*4=24 beams as beams (strong beams) corresponding to the terminal.

Further, based on any one of the foregoing three implementations A1 to A3, the terminal device additionally reports a bitmap (bitmap) to indicate the first beam.

Implementation B1: As shown in FIG. 7, when the terminal reports, based on any one of the foregoing three implementations A1 to A3, the at least one beam corresponding to the terminal, the terminal may further indicate, via the bitmap (bitmap), whether beams at corners of a rectangular window are first beams. "0" indicates a non-first beam, and "1" indicates a first beam. Alternatively, "0" indicates a first beam, and "1" indicates a non-first beam. The terminal reports a total of 6*4=24 beams based on any one of the foregoing three implementations A1 to A3, and indicates that five beams with the value of "0" in the bitmap are not first beams and that seven beams with the value of "1" in the bitmap are first beams. In this case, a number of first beams corresponding to the terminal is 12+7=19.

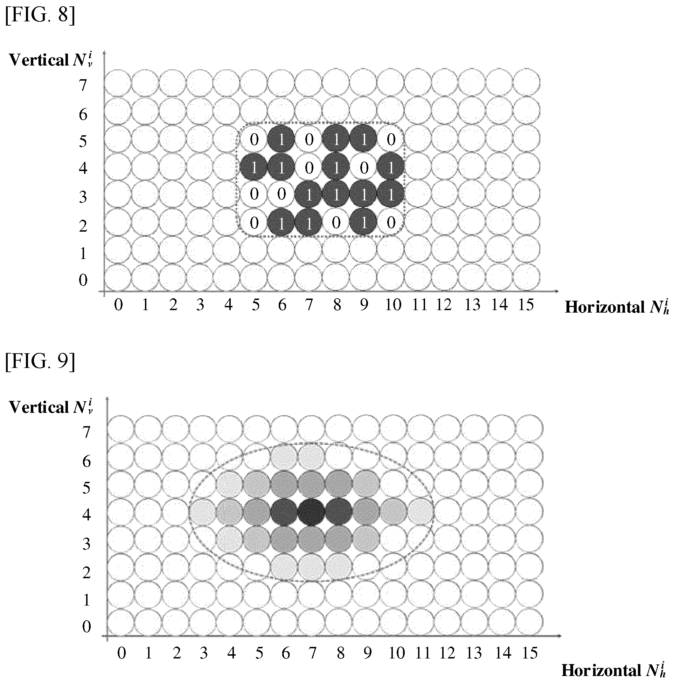

Implementation B2: As shown in FIG. 8, when the terminal reports, based on any one of the foregoing three implementations A1 to A3, the at least one beam corresponding to the terminal, the terminal may further indicate, via the bitmap, whether beams in a rectangular window are first beams. "0" indicates a non-first beam, and "1" indicates a first beam. Alternatively, "0" indicates a first beam, and "1" indicates a non-first beam. The terminal reports a total of 6*4=24 beams based on any one of the foregoing three implementations A1 to A3, and indicates that 10 beams with the value of "0" in the bitmap are not first beams and that 14 beams with the value of "1" in the bitmap are first beams. In this case, a number of first beams corresponding to the terminal is 14.

To enable higher performance of space division on the SRS, the terminal may further additionally report energy distribution of the strong beam, so that overlapping beam energy (namely, spatial domain interference) is minimized. This embodiment is intended to enable a technology of space division on the SRS by feeding back spatial domain information with as low overheads as possible.

There may be the following several implementations of reporting of the energy distribution of the beam by the terminal:

Implementation C1: The first information further indicates energy information of each of the at least one first beam. For example, it is assumed that based on any one of the foregoing three implementations A1 to A3, when the terminal reports N first beams corresponding to the terminal, the terminal may further additionally feed back an N-length vector in the first information, where each element of the vector corresponds to energy information of one first beam. In this implementation, a value of energy of each of the at least one first beam corresponding to the terminal is reported. After receiving the first information, the network device can obtain, without further calculation, energy information of each of the at least one first beam corresponding to the terminal.

Implementation C2: The first information further indicates energy information of a strongest beam in the at least one first beam and energy information that is of each of the at least one first beam and that is normalized based on the energy information of the strongest beam. For example, it is assumed that based on any one of the foregoing three implementations A1 to A3, when the terminal reports N first beams corresponding to the terminal, the terminal may further additionally feed back an N-length vector and the energy information of the strongest beam in the first information, where the N-length vector corresponds to a result that is of the N beams and that is normalized based on energy of the strongest beam. In this implementation, a relative value of energy of each of the at least one first beam corresponding to the terminal is reported, so that signaling overheads can be reduced to some extent. After receiving the first information, the network device may obtain the value of the energy of each of the at least one first beam through calculation based on the energy information of the strongest beam in the at least one first beam and the normalized energy information of each of the at least one first beam.

Implementation C3: FIG. 7 is another diagram of an example of quantization of energy distribution of a beam according to an embodiment of this application. When the terminal reports, based on any one of the foregoing three implementations A1 to A3, the at least one beam corresponding to the terminal, the terminal may further indicate specific strong beams at the corners of the rectangular window via the bitmap (bitmap). "0" indicates a non-strong beam, and "1" indicates a strong beam. Alternatively, "0" indicates a strong beam, and "1" indicates a non-strong beam. The terminal reports a total of 6*4=24 beams based on any one of the foregoing three implementations A1 to A3, and indicates, via the bitmap, energy information of a total of 3*4=12 beams at the corners of the rectangular window, seven strong beams with the value of "1", and five non-strong beams with the value of "0". In this case, a number of strong beams corresponding to the terminal is 6*4-5=19.

Implementation C4: FIG. 8 is still another diagram of an example of quantization of energy distribution of a beam according to an embodiment of this application. When the terminal reports, based on any one of the foregoing three implementations A1 to A3, the at least one beam corresponding to the terminal, the terminal may further indicate all specific strong beams in the rectangular window via the bitmap. "0" indicates a non-strong beam, and "1" indicates a strong beam. Alternatively, "0" indicates a strong beam, and "1" indicates a non-strong beam. The terminal reports a total of 6*4=24 beams based on any one of the foregoing three implementations A1 to A3, and indicates, via the bitmap, 14 strong beams with the value of "1" and 10 non-strong beams with the value of "0". In this way, it may be learned that a number of strong beams corresponding to the terminal is 14.

In addition to the foregoing rectangular window form, the terminal may alternatively report a beam range and the energy distribution of the beams in an "energy ellipse" form. For reporting of the beam range by the terminal, refer to the foregoing implementations in A1 to A3. In addition, the terminal may report the energy distribution of the beams as follows.

For example, the first information includes at least one of the following information: a horizontal spatial domain basis index corresponding to at least one second beam and a vertical spatial domain basis index corresponding to the at least one second beam, where the at least one second beam is one or more beams with strongest energy in the at least one first beam, and the at least one first beam may be all the beams corresponding to the terminal. The second beam may be referred to as a "center beam". FIG. 9 is still another diagram of an example of quantization of energy distribution of a beam according to an embodiment of this application. A horizontal spatial domain basis index of the second beam is $i_{hor} = 7$, and a vertical spatial domain basis index of the second beam is $i_{ver} = 4$. The first information indicates 7 and 4, so that the second beam is determined.

Further, the first information may further include at least one of the following information: a horizontal spatial domain basis radius corresponding to the at least one second beam and a vertical spatial domain basis radius corresponding to the at least one second beam, where the horizontal spatial domain basis radius and the vertical spatial domain basis radius are determined based on the at least one first beam. For example, a horizontal spatial domain basis corresponding to the at least one second beam and a vertical spatial domain basis corresponding to the at least one second beam may form an "ellipse" shape as shown in FIG. 9. Therefore, the first information may further include the horizontal spatial domain basis radius corresponding to the at least one second beam and/or the vertical spatial domain basis radius corresponding to the at least one second beam, so that a size of the "elliptical" shape can be determined. Still refer to FIG. 9. For example, the horizontal spatial domain basis index corresponding to the second beam is $i_{hor} = 7$, the vertical spatial domain basis index corresponding to the second beam is $i_{ver} = 4$, and the second beam is used as a center. The first information further includes a horizontal spatial domain basis radius $r_{hori} = 4$ corresponding to the second beam and a vertical spatial domain basis radius $r_{ver} = 2$ corresponding to the second beam. Based on the first information, the network device may determine that a beam range corresponding to the terminal is a

beam that satisfies $\dfrac{(i_1 - i_{hor})^2}{r_{hori}^2} + \dfrac{(i_2 - i_{ver})^2}{r_{ver}^2} \le 1$,

where $i_1$ is a horizontal spatial domain basis index of the beam, and $i_2$ is a vertical spatial domain basis index of the beam. For example, for a horizontal spatial domain basis index and a vertical spatial domain basis index (9, 5), it may be determined that the foregoing formula is satisfied. In this way, it may be determined that a beam whose horizontal spatial domain basis index and vertical spatial domain basis index are (9, 5) is in the beam range corresponding to the terminal. For another example, for a horizontal spatial domain basis index and a vertical spatial domain basis index (13, 2), it may be determined that the foregoing formula is not satisfied. In this way, it may be determined that a beam whose horizontal spatial domain basis index and vertical spatial domain basis index are (13, 2) is not in the beam range corresponding to the terminal.

Further, the first information may further include at least one of the following information: an energy gradient in a horizontal spatial domain basis direction corresponding to the at least one second beam and an energy gradient in a vertical spatial domain basis direction corresponding to the at least one second beam, where the energy gradient in the horizontal spatial domain basis direction and the energy gradient in the vertical spatial domain basis direction are determined based on the at least one first beam.

For example, as shown in FIG. 9, the horizontal spatial domain basis index corresponding to the second beam is $i_{hor} = 7$, the vertical spatial domain basis index corresponding to the second beam is $i_{ver} = 4$, and the second beam is used as a center. The first information further includes an energy gradient $d_{hor} = 0.2$ in the horizontal spatial domain basis direction corresponding to the second beam and an energy gradient $d_{ver} = 0.33$ in the vertical spatial domain basis direction corresponding to the second beam. Based on the first information, the network device may determine that a beam range corresponding to the terminal device is a beam that satisfies $w(i_1, i_2) = [1 - d_{hor} * |i_1 - i_{hor}|] * [1 - d_{ver} * |i_2 - i_{ver}|] > 0$, and a ratio of energy of the beam to energy of the second beam is $w(i_1, i_2)$, where $i_1$ is a horizontal spatial domain basis index of the beam, and $i_2$ is a vertical spatial domain basis index of the beam. For example, for a beam whose horizontal spatial domain basis index and vertical spatial domain basis index are (9, 5), w (9, 5)>0. Therefore, the beam whose horizontal spatial domain basis index and vertical spatial domain basis index are (9, 5) is in the beam range corresponding to the terminal. For another example, for a beam whose horizontal spatial domain basis index and vertical spatial domain basis index are (13, 2), w (13, 2)<0. Therefore, the beam corresponding to the horizontal spatial domain basis index and the vertical spatial domain basis index (13, 2) is not in the beam range corresponding to the terminal.

Further, the first information may further include at least one of the following information: a value $P_{center}$ of energy corresponding to the at least one second beam. For example, as shown in FIG. 9, the horizontal spatial domain basis index corresponding to the second beam is $i_{hor} = 7$, the vertical spatial domain basis index corresponding to the second beam is $i_{ver} = 4$, and the second beam is used as a center. The first information further includes the energy gradient $d_{hor} = 0.2$ in the horizontal spatial domain basis direction corresponding to the second beam, the energy gradient $d_{ver}$ =0.33 in the vertical spatial domain basis direction corresponding to the second beam, and the value $P_{center}$ = 20 of energy corresponding to the second beam. Based on the first information, the network device may determine that a beam range corresponding to the terminal device is a beam that satisfies $w(i_1,i_2) = [1 - d_{hor} *|i_1 - i_{hor}|] * [1 - d_{ver} *|i_2 - i_{ver}|] > 0$, a ratio of energy of the beam to the energy of the second beam is $w(i_1,i_2)$, and a value of the energy of the beam is $P_{tar} = w(i_1,i_2) * P_{center}$, where $i_1$ is a horizontal spatial domain basis index of the beam, and $i_2$ is a vertical spatial domain basis index of the beam.

S204: The network device determines a reference signal resource or a reference signal resource set of the terminal based on the first information.

For example, the network device may pair/group the terminals based on strong beam ranges fed back by the terminals, and a same SRS resource (SRS resource) or SRS resource set is allocated to terminals in a same group. Specifically, there may be the following several implementations:

Implementation D1: Group the terminals based on the strong beam ranges fed back by the terminals. A grouping criterion is that beam ranges of terminals in a group overlap with each other minimally.

Implementation D2: Group the terminals based on the strong beam ranges and energy distribution that are fed back by the terminals. A grouping criterion is that a weighted sum of energy of overlapping beams of terminals in a group is minimum, so that overall interference energy is minimized.

The terminal feeds back a spatial domain channel characteristic of the terminal to the network device, so that the network device is enabled to perform group allocation of the SRS resource or the SRS resource set, and the same SRS resource or SRS resource set is used in the group, to implement capacity expansion of the SRS resource.

S205: The network device sends second information to the terminal.

Correspondingly, the terminal receives the second information.

The second information indicates the reference signal resource or the reference signal resource set.

The following steps S206 to S208 may be implemented in this embodiment, or may be implemented independently from this embodiment. Therefore, the steps S206 to S208 are optional, and are indicated by dashed lines in the figure.

S206: The terminal sends a second reference signal to the network device based on the reference signal resource or the reference signal resource set.

Correspondingly, the network device receives the second reference signal based on the reference signal resource or the reference signal resource set.

The second reference signal is an uplink reference signal. For example, the second reference signal is a sounding reference signal (sounding reference signal, SRS).

After receiving the second information, the terminal sends, based on the SRS resource or the SRS resource set indicated by the second information, the SRS on the SRS resource or the SRS resource set.

S207: For the terminals in the same group, the network device divides estimated channels in beam domain based on the strong beam ranges reported by the terminals, to obtain a channel of each terminal.

After each group of terminals sends SRSs based on the allocated SRS resource or SRS resource set, the network device obtains superimposed channels of the terminals in the group, and recovers the channels of the terminals.

In a manner, the network device divides the estimated channels in beam domain based on the strong beam ranges reported by the terminals, to obtain the channel of each terminal.

In another manner, with reference to the strong beam ranges reported by the terminals, the network device divides the estimated channels in beam domain by using more or fewer beams, to obtain the channel of each terminal (where for example, a strong interference beam is avoided).

S208: The network device sends downlink precoding to the terminal.

The base station minimizes mutual beam interference between space division terminals, so that the same SRS resource or SRS resource set is allocated to terminals occupying different beam ranges in beam domain, to enable a capacity of the SRS resource or SRS resource set to be expanded by two to three times.

In the foregoing manners, the network device implements terminal grouping and channel recovery for time-frequency resource multiplexing, to implement capacity expansion of the SRS resource or SRS resource set, and serve more terminals under existing resources. In this way, impact caused by insufficient SRS resources or SRS resource sets is reduced.

According to the communication method provided in this embodiment of this application, the terminal feeds back, to the network device, the beam corresponding to the terminal, so that the network device can allocate the reference signal resource or the reference signal resource set based on the beam corresponding to the terminal, thereby improving resource utilization.

It may be understood that, to implement functions in the foregoing embodiments, the network device and the terminal include corresponding hardware structures and/or software modules for performing the functions. A person skilled in the art should be easily aware that, in this application, units and method steps described in examples with reference to embodiments disclosed in this application can be implemented in a form of hardware or a combination of hardware and computer software. Whether a specific function is performed by hardware or hardware driven by computer software depends on particular application scenarios and design constraints of the technical solutions.

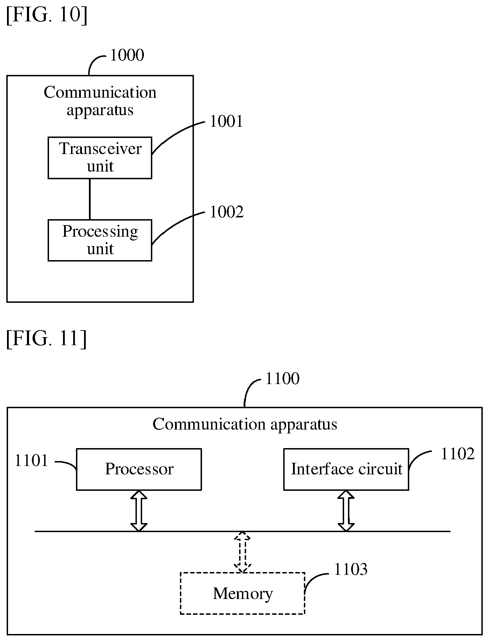

FIG. 10 and FIG. 11 are diagrams of structures of possible communication apparatuses according to embodiments of this application. The communication apparatuses may be configured to implement functions of the terminal or the network device in the foregoing method embodiment, and therefore can also achieve beneficial effects of the foregoing method embodiment. In embodiments of this application, the communication apparatus may be one of the terminals 110a to 110j shown in FIG. 1, may be the network device 100a or 100b shown in FIG. 1, or may be a module (for example, a chip) used in the terminal or the network device.

As shown in FIG. 10, the communication apparatus 1000 includes a processing unit 1001 and a transceiver unit 1002. The communication apparatus 1000 is configured to implement functions of the terminal or the network device in the method embodiment shown in FIG. 2.

When the communication apparatus 1000 is configured to implement the functions of the terminal in the method embodiment shown in FIG. 2, the transceiver unit 1020 is configured to perform operations performed by the terminal in steps S200, S203, S205, S206, and S208 in the embodiment shown in FIG. 2; and the processing unit 1010 is configured to perform steps S201 and S202 in the embodiment shown in FIG. 2.

When the communication apparatus 1000 is configured to implement the functions of the network device in the method embodiment shown in FIG. 2, the transceiver unit 1020 is configured to perform operations performed by the network device in steps S200, S203, S205, S206, and S208 in the embodiment shown in FIG. 2; and the processing unit 1010 is configured to perform steps S204 and S207 in the embodiment shown in FIG. 2.

For more detailed descriptions of the processing unit 1001 and the transceiver unit 1002, directly refer to related descriptions in the method embodiment shown in FIG. 2. Details are not described herein again.

As shown in FIG. 11, the communication apparatus 1100 includes a processor 1101 and an interface circuit 1102. The processor 1101 and the interface circuit 1102 are coupled to each other. It may be understood that, the interface circuit 1102 may be a transceiver or an input/output interface. Optionally, the communication apparatus 1100 may further include a memory 1103 configured to store instructions executed by the processor 1101, store input data required by the processor 1101 to run the instructions, or store data generated after the processor 1101 runs the instructions.

When the communication apparatus 1100 is configured to implement the method shown in FIG. 2, the processor 1101 is configured to implement functions of the foregoing processing unit 1001, and the interface circuit 1102 is configured to implement functions of the foregoing transceiver unit 1002.

When the communication apparatus is a chip used in a terminal, the chip in the terminal implements functions of the terminal in the foregoing method embodiment. The chip in the terminal receives information from another module (for example, a radio frequency module or an antenna) in the terminal, where the information is sent by a network device to the terminal. Alternatively, the chip in the terminal sends information to another module (for example, a radio frequency module or an antenna) in the terminal, where the information is sent by the terminal to a network device.

When the communication apparatus is a chip used in a network device, the chip in the network device implements functions of the network device in the foregoing method embodiment. The chip in the network device receives information from another module (for example, a radio frequency module or an antenna) in the network device, where the information is sent by a terminal to the network device. Alternatively, the chip in the network device sends information to another module (for example, a radio frequency module or an antenna) in the network device, where the information is sent by the network device to a terminal.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

Method steps in embodiments of this application may be implemented in a hardware manner, or may be implemented by a processor by executing software instructions. The software instructions may be formed by corresponding software modules. The software modules may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well known in the art. For example, a storage medium is coupled to a processor, so that the processor can read information from the storage medium and write information into the storage medium. Certainly, the storage medium may alternatively be a component of the processor. The processor and the storage medium may be located in an ASIC. In addition, the ASIC may be located in a network device or a terminal device. Certainly, the processor and the storage medium may alternatively exist in a network device or a terminal device as discrete components.

All or a part of the foregoing embodiments may be implemented by using software, hardware, firmware, or any combination thereof. When the software is used for implementing embodiments, all or a part of embodiments may be implemented in a form of a computer program product. The computer program product includes one or more computer programs or instructions. When the computer programs or the instructions are loaded and executed on a computer, all or a part of procedures or functions in embodiments of this application are performed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, a computer, a server, or a data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium, such as a floppy disk, a hard disk, or a magnetic tape; or may be an optical medium, for example, a digital video disc; or may be a semiconductor medium, for example, a solid-state drive.

In embodiments of this application, unless otherwise specified or there is a logical conflict, terms and/or descriptions in different embodiments are consistent and may be mutually referenced. Technical features in different embodiments may be combined based on an internal logical relationship thereof, to form a new embodiment.

In this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. In text descriptions of this application, the character "/" generally indicates an "or" relationship between associated objects. In a formula of this application, the character "/" indicates a "division" relationship between the associated objects.

It may be understood that, various numbers in embodiments of this application are merely used for differentiation for ease of description, but are not used for limiting the scope of embodiments of this application. Sequence numbers of the foregoing processes do not mean execution sequences. The execution sequences of the processes should be determined based on functions and internal logic of the processes.

**Claims**

1. A communication method, wherein the method comprises:

receiving, by a network device, first information from a terminal, wherein the first information indicates at least one first beam corresponding to the terminal;
determining, by the network device, a reference signal resource or a reference signal resource set of the terminal based on the first information; and
sending, by the network device, second information to the terminal, wherein the second information indicates the reference signal resource or the reference signal resource set.

2. The method according to claim 1, wherein the method further comprises:
receiving, by the network device, a reference signal sent by the terminal based on the reference signal resource or the reference signal resource set.

3. A communication method, wherein the method comprises:

sending, by a terminal, first information to a network device, wherein the first information indicates at least one first beam corresponding to the terminal; and
receiving, by the terminal, second information from the network device, wherein the second information indicates a reference signal resource or a reference signal resource set, and the reference signal resource or the reference signal resource set is determined based on the first information.

4. The method according to claim 3, wherein the method further comprises:
sending, by the terminal, a reference signal to the network device based on the reference signal resource or the reference signal resource set.

5. A communication apparatus, wherein the apparatus comprises a transceiver unit and a processing unit, wherein

the transceiver unit is configured to: receive first information from a terminal, wherein the first information indicates at least one first beam corresponding to the terminal;
the processing unit is configured to: determine a reference signal resource or a reference signal resource set of the terminal based on the first information; and
the transceiver unit is further configured to: send second information to the terminal, wherein the second information indicates the reference signal resource or the reference signal resource set.

**6.** The apparatus according to claim 5, wherein the transceiver unit is further configured to: receive a reference signal sent by the terminal based on the reference signal resource or the reference signal resource set.

**7.** A communication apparatus, wherein the apparatus comprises a transceiver unit, wherein

the transceiver unit is configured to: send first information to a network device, wherein the first information indicates at least one first beam corresponding to the terminal; and
the transceiver unit is further configured to: receive second information from the network device, wherein the second information indicates a reference signal resource or a reference signal resource set, and the reference signal resource or the reference signal resource set is determined based on the first information.

**8.** The apparatus according to claim 7, wherein the transceiver unit is further configured to: send a reference signal to the network device based on the reference signal resource or the reference signal resource set.

**9.** The method or apparatus according to any one of claims 1 to 8, wherein the at least one first beam is all beams corresponding to the terminal, the at least one first beam is a specified number of beams with strongest energy in all beams corresponding to the terminal, or the at least one first beam is a beam whose energy is greater than or equal to a first threshold in all beams corresponding to the terminal, wherein the energy is a norm sum of one or more frequency domain/delay channels corresponding to a beam.

**10.** The method or apparatus according to any one of claims 1 to 9, wherein the at least one first beam is determined via at least one horizontal spatial domain basis and at least one vertical spatial domain basis, and each of the at least one horizontal spatial domain basis and each of the at least one vertical spatial domain basis are used for determining one first beam.

**11.** The method or apparatus according to claim 10, wherein the at least one horizontal spatial domain basis comprises one or more groups of horizontal spatial domain bases, each group of the one or more groups of horizontal spatial domain bases comprises at least two horizontal spatial domain bases, the at least two horizontal spatial domain bases are consecutive, and the consecutive means that horizontal spatial domain basis indexes corresponding to the horizontal spatial domain bases are consecutive.

**12.** The method or apparatus according to claim 10, wherein for each group of the horizontal spatial domain bases, the first information indicates two horizontal spatial domain basis indexes, and the two horizontal spatial domain basis indexes are an index with a largest value and an index with a smallest value in horizontal spatial domain basis indexes corresponding to one group of the horizontal spatial domain bases.

**13.** The method or apparatus according to claim 10, wherein for each group of the horizontal spatial domain bases, the first information indicates one horizontal spatial domain basis index and one index length value, the horizontal spatial domain basis index and the index length value are used for determining each horizontal spatial domain base in the one group of the horizontal spatial domain bases, and the horizontal spatial domain basis index is an index with a largest value or an index with a smallest value in horizontal spatial domain basis indexes corresponding to one group of the horizontal spatial domain bases.

**14.** The method or apparatus according to claim 10, wherein the first information indicates a horizontal spatial domain basis index corresponding to each of the at least one horizontal spatial domain basis.

**15.** The method or apparatus according to any one of claims 10 to 14, wherein the at least one vertical spatial domain basis comprises one or more groups of vertical spatial domain bases, each group of the one or more groups of vertical spatial domain bases comprises at least two vertical spatial domain bases, the at least two vertical spatial domain bases are consecutive, and the consecutive means that vertical spatial domain basis indexes corresponding to the vertical spatial domain bases are consecutive.

**16.** The method or apparatus according to claim 15, wherein for each group of the vertical spatial domain bases, the first information further indicates two vertical spatial domain basis indexes, and the two vertical spatial domain basis indexes are respectively an index with a largest value and an index with a smallest value in vertical spatial domain basis indexes corresponding to the group of the vertical spatial domain bases.

**17.** The method or apparatus according to claim 15, wherein for each group of the vertical spatial domain bases, the first information further indicates one vertical spatial domain basis index and one index length value, the vertical spatial domain basis index and the index length value are used for determining each vertical spatial domain base in the one group of the vertical spatial domain bases, and the vertical spatial domain basis index is an index with a largest value or an index with a smallest value in vertical spatial domain basis indexes corresponding to the group of the vertical spatial domain bases.

18. The method or apparatus according to claim 15, wherein the first information further indicates a vertical spatial domain basis index corresponding to each of the at least one vertical spatial domain basis.

19. The method or apparatus according to any one of claims 1 to 18, wherein the first information further indicates energy information of each of the at least one first beam; or energy information of a strongest beam in the at least one first beam and energy information that is of each of the at least one first beam and that is normalized based on the energy information of the strongest beam.

20. The method or apparatus according to any one of claims 1 to 19, wherein the first information comprises at least one of the following information: a horizontal spatial domain basis index corresponding to at least one second beam and a vertical spatial domain basis index corresponding to the at least one second beam, wherein the at least one second beam is one or more beams with strongest energy in the at least one first beam.

21. The method or apparatus according to claim 20, wherein the first information further comprises at least one of the following information: a horizontal spatial domain basis radius corresponding to the at least one second beam and a vertical spatial domain basis radius corresponding to the at least one second beam, wherein the horizontal spatial domain basis radius and the vertical spatial domain basis radius are determined based on the at least one first beam.

22. The method or apparatus according to claim 20 or 21, wherein the first information further comprises at least one of the following information: an energy gradient in a horizontal spatial domain basis direction corresponding to the at least one second beam and an energy gradient in a vertical spatial domain basis direction corresponding to the at least one second beam, wherein the energy gradient in the horizontal spatial domain basis direction and the energy gradient in the vertical spatial domain basis direction are determined based on the at least one first beam.

23. The method or apparatus according to any one of claims 1 to 22, wherein the first information further comprises bitmap indication information of the at least one first beam, one bit in the bitmap indication information corresponds to one beam, and the bit indicates that the beam corresponding to the bit is/is not the first beam.

24. A communication system, comprising the communication apparatus according to any one of claims 5 to 23.

25. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus; and the processor is configured to implement the method according to any one of claims 1 to 4 and claims 9 to 23 by using a logic circuit or by executing code instructions.

26. A chip, wherein the chip is configured to perform the method according to any one of claims 1 to 4 and claims 9 to 23.

27. A chip module, comprising a transceiver component and a chip, wherein the chip is configured to perform the method according to any one of claims 1 to 4 and claims 9 to 23.

28. A computer-readable storage medium, wherein the storage medium stores a computer program or instructions; and when the computer program or the instructions are executed by a communication apparatus, the method according to any one of claims 1 to 4 and claims 9 to 23 is implemented.

[FIG. 1]

[FIG. 2]

```
┌──────────┐                                    ┌──────────┐
│ Terminal │                                    │ Network  │
│          │                                    │  device  │
└────┬─────┘                                    └────┬─────┘
     │         S200: First reference signal          │
     │           (for example, a CSI-RS)             │
     │◄ ─ ─ ─ ─ ─ ─ ─ ─ ─ ─ ─ ─ ─ ─ ─ ─ ─ ─ ─ ─ ─ ─ │
```

┌─────────────────────────────────┐
│ S201: The terminal measures the │
│ first reference signal, to obtain a │
│      beam domain channel        │
└─────────────────────────────────┘

┌─────────────────────────────────┐
│ S202: The terminal obtains first │
│           information           │
└─────────────────────────────────┘

S203: First information (which indicates
at least one first beam corresponding to
the terminal)

┌───────────────────────────────────────┐
│ S204: Determine a reference signal resource │
│   or a reference signal resource set of the │
│  terminal based on the first information │
└───────────────────────────────────────┘

S205: Second information (which
indicates the reference signal resource
or the reference signal resource set)

S206: Send a second reference signal (for
example, an SRS) based on the reference signal
resource or the reference signal resource set

┌──────────────────────────────────────────┐
│   S207: For terminals in a same group, the │
│ network device divides estimated channels in │
│   beam domain based on strong beam ranges │
│ reported by the terminals, to obtain a channel │
│            of each terminal             │
└──────────────────────────────────────────┘

S208: Downlink precoding

[FIG. 3]

Diameter expansion

[FIG. 4a]

64T, energy

X 25
Y 4410.5603

X 57
Y 3951.1617

[FIG. 4b]

256T, energy

[FIG. 5]

256T, energy

[FIG. 6]

[FIG. 7]

[FIG. 8]

[FIG. 9]

[FIG. 10]

1000

Communication apparatus

Transceiver unit — 1001

Processing unit — 1002

[FIG. 11]

1100

Communication apparatus

1101 — Processor

Interface circuit — 1102

Memory — 1103

## INTERNATIONAL SEARCH REPORT

International application No.

**PCT/CN2023/141699**

### A. CLASSIFICATION OF SUBJECT MATTER

H04W 72/21(2023.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNKI; CNTXT; VEN; USTXT; WOTXT; EPTXT; 3GPP; IEEE; IETF: 参考信号, 上行, 资源, 配置, 分配, 节约, 节省, 波束, 测量, 上报, 极化, 能量, SRS, sounding reference signal, uplink, UL, resource, configure, save, beam, measure, report, polar, energy

### C. DOCUMENTS CONSIDERED TO BE RELEVANT

| Category* | Citation of document, with indication, where appropriate, of the relevant passages | Relevant to claim No. |
|---|---|---|
| X | CN 107889256 A (BEIJING XINWEI TELECOM TECHNOLOGY CO., LTD.) 06 April 2018 (2018-04-06)<br>description, paragraphs [0095]-[0196] | 1-9, 24-28 |
| A | CN 104767586 A (CHINA MOBILE COMMUNICATIONS GROUP CO., LTD.) 08 July 2015 (2015-07-08)<br>entire document | 1-28 |
| A | CN 108401264 A (ZTE CORP.) 14 August 2018 (2018-08-14)<br>entire document | 1-28 |
| A | CN 114126055 A (DATANG MOBILE COMMUNICATIONS EQUIPMENT CO., LTD.) 01 March 2022 (2022-03-01)<br>entire document | 1-28 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 February 2024** | **01 March 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/141699**

| Patent document cited in search report | | | Publication date (day/month/year) | Patent family member(s) | Publication date (day/month/year) |
|---|---|---|---|---|---|
| CN | 107889256 | A | 06 April 2018 | None | |
| CN | 104767586 | A | 08 July 2015 | None | |
| CN | 108401264 | A | 14 August 2018 | None | |
| CN | 114126055 | A | 01 March 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211743593